# FASCICULE DE BREVET EUROPEEN

(11) **EP 4 086 466 B1**
(45) Date de publication et mention de la délivrance du brevet: **13.03.2024**
(21) Numéro de dépôt: 22315081.4
(22) Date de dépôt: 08.04.2022
(51) Int. Cl.: F16B 21/07

(54) **DISPOSITIF DE CONNEXION**
BEFESTIGUNGSVORRICHTUNG
FASTENING DEVICE

(30) Priorité: 06.05.2021 EP 21172445; 19.07.2021 EP 21186457
(43) Date de publication de la demande: 09.11.2022
(73) Titulaire: Illinois Tool Works Inc., Glenview, IL 60025 (US)
(72) Inventeur: Broodryk, Adriaan, Glenview, 60025 (US); Kuhm, Michel, Glenview, 60025 (US); Huët, Laurent, Glenview, 60025 (US)
(74) Mandataire: HGF

(56) Documents cités:
- EP-A1- 0 824 327
- WO-A1-2015/148690
- WO-A1-2016/207531
- US-B2- 10 323 674

## Description

### Domaine technique de l'invention

L'invention concerne le domaine des dispositifs de connexion permettant de fixer de manière amovible un composant sur un support. Plus précisément, mais pas exclusivement, cette invention concerne un dispositif de connexion pour fixer un composant sur un panneau de carrosserie de véhicule.

### Arrière-plan technique

Les dispositifs de fixation pour fixer des composants à des panneaux de carrosserie de véhicules sont bien connus. Il s'agit notamment d'attaches filetées classiques, de clips, de rivets et autres. Plusieurs dispositifs de fixation sur mesure ont également été développés à cet effet.

Le document US10323674 décrit un dispositif de fixation d'un composant à un panneau de carrosserie de véhicule dans lequel un logement cylindrique creux et une partie de fixation avec une paire de bras pour fixer le logement à un goujon. Le boîtier est placé sur le goujon et les bras de la pièce de fixation sont insérés dans des évidements latéraux du boîtier pour s'engager dans le goujon. Le boîtier comprend quatre plaques d'engagement configurées pour emprisonner un composant entre elles et le panneau de carrosserie du véhicule. Cependant, avec un tel dispositif de fixation, le prémontage des pièces de fixation sur le composant à fixer sur le panneau de carrosserie du véhicule est complexe et prend du temps.

La présente invention propose un perfectionnement à cette technologie.

### Résumé de l'invention

L'invention vise à faciliter le prémontage de la pièce de fixation sur un composant à fixer sur le panneau de carrosserie du véhicule.

L'invention vise également à fournir un moyen de connexion qui peut être pré assemblée avec le composant.

L'invention vise également à fournir une solution qui permette la connexion (ou solidarisation) et la déconnexion (ou désolidarisation) du composant à la carrosserie qui soit simple et rapide.

L'invention concerne un dispositif de connexion pour fixer de manière amovible un composant à un support, le dispositif de connexion comprenant : un clip avec un élément d'engagement pour engager un composant avec un trou ; et un insert monté sur le clip et comportant un verrou, dans lequel l'insert est mobile par rapport au clip entre : une position déployée, dans laquelle le verrou est aligné, en utilisation, avec le trou du composant dans lequel le clip est engagé, de sorte qu'un goujon d'un support peut être poussé dans le trou et en engagement avec le verrou pour fixer le composant au support ; et une position rétractée, dans laquelle le verrou n'est pas aligné avec le trou, de sorte que le goujon peut être retiré du trou et le composant peut être retiré du support.

L'invention concerne également un dispositif de connexion pour fixer de manière amovible un composant à un support, le dispositif de connexion comprenant : un clip avec un élément d'engagement pour s'engager dans un trou dans un composant ; et un insert monté sur le clip et comportant un verrou, dans lequel l'insert est mobile par rapport au clip entre : une position déployée, dans laquelle le verrou est aligné, en utilisation, avec le trou du composant dans lequel le clip est engagé, de sorte qu'un goujon d'un support peut être poussé dans le trou et en engagement avec le verrou pour fixer le composant au support ; et une position rétractée, dans laquelle le verrou n'est pas aligné avec le trou, de sorte que le goujon peut être retiré du trou et le composant peut être retiré du support.

Ainsi, l'invention fournit un moyen de connecter un composant à un panneau de carrosserie de véhicule, qui peut être pré-assemblé avec le composant pour permettre une connexion et une déconnexion simples notamment avec un goujon du panneau de carrosserie de véhicule.

L'élément d'engagement peut être destiné à s'engager avec ou dans le trou. L'élément d'engagement peut comprendre une saillie. Le clip peut comprendre un bras supérieur. Le clip peut comprendre un bras inférieur, par exemple entre lesquels la saillie s'étend. Cela peut permettre au clip d'être forcé, en utilisation, sur une bride de fixation du composant qui comprend le trou de sorte que la saillie s'enclenche en engagement avec le trou.

Selon un mode de réalisation de l'invention, l'élément d'engagement comprend une saillie et le clip comprend un bras supérieur et un bras inférieur entre lesquels la saillie s'étend pour permettre au clip d'être forcé, en utilisation, sur une bride de fixation du composant qui comprend le trou de sorte que la saillie s'enclenche en engagement avec le trou.

Le clip peut comprendre un guide profilé, par exemple le long duquel l'insert peut coulisser de manière captive entre les positions déployée et rétractée. Le guide profilé peut comprendre ou être décrit par une paire de rebords et/ou de lèvres opposés. Chaque rebord peut comprendre une lèvre respective, qui peut s'étendre vers la lèvre de l'autre rebord. Le guide profilé ou les rebords ou les lèvres peuvent décrire une fente ou une rainure de clavette. L'insert peut avoir une section transversale qui correspond ou coopère avec la fente ou la rainure.

L'insert peut être retenu, par exemple de manière amovible, dans chacune des positions étendue et rétractée. L'insert peut être retenu par des éléments de retenue coopérants de l'insert et du clip. Les éléments de retenue peuvent comprendre une saillie sur l'un de l'insert et du clip ou du guide profilé, qui peut coopérer avec un évidement ou un trou dans l'autre de l'insert et du clip ou du guide profilé.

L'insert peut comprendre une saillie. Le clip, le guide profilé, chaque rebord ou chaque lèvre peut comprendre un évidement ou un trou. Le clip, le guide profilé, chaque rebord ou chaque lèvre peut comprendre une paire d'évidements ou de trous. Le clip, le guide profilé, chaque rebord ou chaque lèvre peut comprendre un premier évidement ou trou, qui peut coopérer avec la saillie de l'insert lorsque l'insert est en position déployée. Le clip, le guide profilé, chaque rebord ou chaque lèvre peut comprendre un deuxième évidement ou trou, qui peut coopérer avec la saillie de l'insert lorsque l'insert est en position rétractée.

L'insert peut être contraint de manière élastique, par exemple vers la position déployée. L'insert peut comprendre au moins un élément de ressort. Le ou les éléments de ressort peuvent coopérer avec le clip, par exemple pour résister au mouvement de l'insert de la position déployée et/ou vers la position rétractée. Le ou les éléments de ressort peuvent coopérer avec le clip pour fournir une force de ressort vers la position déployée, par exemple à partir de la position rétractée. Le ou l'un des éléments de ressort peut comprendre un arc ou une partie ressort incurvée.

L'élément de ressort peut comprendre une caractéristique de positionnement, telle qu'une encoche ou une fente qui peut être décrite entre une paire de saillies. La caractéristique de positionnement de l'élément de ressort peut se trouver dans une région centrale de celui-ci, par exemple de telle sorte que l'élément de ressort se déforme, en cours d'utilisation, autour de la caractéristique de positionnement pour fournir la force de ressort. La caractéristique de positionnement de l'élément de ressort peut coopérer avec une caractéristique de positionnement du clip. La caractéristique de positionnement du clip peut comprendre une saillie ou un arrêt.

Le ou l'un des éléments de ressort peut comprendre un bras ou une poutre élastiques ou à ressort. Les éléments de ressort peuvent comprendre une paire de bras ou de poutres élastiques ou à ressort. Le ou chaque bras ou poutre peut s'étendre le long de l'un des rails latéraux et/ou peut comporter un évidement. Le ou chaque évidement peut s'engager dans une saillie dans une partie en regard du clip, par exemple pour résister au mouvement de l'insert depuis la position déployée et/ou vers la position rétractée. La saillie et/ou l'évidement peuvent avoir des surfaces inclinées, par exemple des surfaces d'engagement inclinées.

L'insert peut comprendre une poignée, par exemple pour le déplacer entre les positions déployée et rétractée. La poignée peut être située sur un côté de l'insert opposé à l'élément de ressort. Le verrou peut être situé sur le même côté de l'insert que la poignée. Ainsi, par exemple, la poignée est située sur un côté de l'insert opposé à l'élément de ressort et le verrou est situé sur le même côté de l'insert que la poignée. La poignée et/ou le verrou peuvent être reliés à l'élément de ressort par une paire de côtés ou de rails latéraux.

Selon un mode de réalisation de l'invention, le clip comprend une dent disposé en une extrémité du clip. Bien entendu, le clip peut comprendre selon d'autres mode de réalisation de l'invention plusieurs dents.

Selon un mode de réalisation de l'invention, la poignée de l'insert et la dent du clip sont prévus pour coopérer de manière à indiquer que le dispositif de fixation est correctement monté sur le composant.

Selon un mode de réalisation de l'invention,, la poignée de l'insert et la dent du clip sont prévus pour s'emboiter au moins partiellement lorsque le dispositif de fixation est correctement monté sur le composant.

Le verrou peut comprendre des bras de verrouillage opposés. Les bras de verrouillage opposés peuvent être reliés par un autre ou un troisième bras de verrouillage. Le verrou ou chaque bras de verrouillage peut comprendre une ou plusieurs dents, par exemple une pluralité de dents. Les bras de verrouillage peuvent s'étendre dans une direction perpendiculaire à la direction du mouvement de l'insert par rapport au clip. Les dents peuvent être espacées dans une direction perpendiculaire à la direction du mouvement de l'insert par rapport au clip.

Les bras de verrouillage, ou au moins les bras de verrouillage opposés, peuvent être déformables autour d'un axe parallèle à la direction du mouvement de l'insert par rapport au clip. En outre ou alternativement, les bras de verrouillage opposés peuvent être déformables autour d'un axe perpendiculaire à la direction du mouvement de l'insert par rapport au clip et/ou autour de l'autre ou du troisième bras de verrouillage.

Le clip peut comprendre un ou plusieurs amortisseurs de vibrations, par exemple pour s'engager dans ou sur le support. Les amortisseurs de vibrations peuvent se présenter sous la forme d'une ou plusieurs languettes ou éléments inclinées, qui peuvent dépendre et/ou faire saillie vers l'extérieur du bras inférieur du clip. Selon un mode de réalisation de l'invention, au moins un des amortisseurs comprend au moins une languette ou élément incliné qui fait saillie vers l'extérieur du clip. Dans certains exemples, le clip comprend une paire d'amortisseurs de vibrations faisant saillie de chaque côté et/ou de chaque extrémité de la pince, par exemple le bras inférieur du clip.

Pour éviter tout doute, toutes les caractéristiques décrites ici s'appliquent également à tout aspect de l'invention.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] la figure 1 est une vue en perspective d'un dispositif de connexion selon un premier mode de réalisation de l'invention ;
[Fig. 2] la figure 2 est une vue en perspective du clip du dispositif de la figure 1 ;
[Fig. 3] la figure 3 est une vue similaire à celle de la figure 2 montrant la saillie sur le bras inférieur du clip pour s'engager dans un trou dans une bride de fixation ;
[Fig. 4] la figure 4 est une vue en perspective de l'insert du dispositif de la figure 1 ;
[Fig. 5] la figure 5 est une vue en plan du dispositif de la figure 1 montré en position déployée ;
[Fig. 6] la figure 6 est une vue en coupe le long de la ligne A-A de la figure 5 ;
[Fig. 7] la figure 7 est une vue en plan du dispositif de la figure 1 montré en position rétractée ;
[Fig. 8] la figure 8 est une vue en coupe le long de la ligne B-B de la figure 7 ;
[Fig. 9] la figure 9 est une vue en perspective illustrant le dispositif de la figure 1 sur le point d'être fixé à la bride de fixation d'un composant ;
[Fig. 10] la figure 10 est une vue similaire à celle de la figure 9 montrant le dispositif de la figure 1 monté sur la bride de fixation du composant immédiatement avant qu'il ne soit monté sur un goujon d'un panneau de carrosserie de véhicule ;
[Fig. 11] la figure 11 est une vue en perspective agrandie montrant le dispositif de la figure 1 monté sur la bride de fixation du composant et s'engageant dans le goujon du panneau de carrosserie du véhicule ;
[Fig. 12] la figure 12 est une vue en coupe de l'ensemble de la figure 11 montrant l'engagement entre le verrou et le goujon ;
[Fig. 13] la figure 13 est une vue similaire à celle de la figure 11, mais montrant le dispositif en position rétractée ;
[Fig. 14] la figure 14 est une vue en coupe de l'ensemble de la figure 13 ;
[Fig. 15] la figure 15 est une vue similaire à celle des figures 9 et 10 montrant le dispositif en position rétractée lorsqu'il est retiré du goujon.
[Fig. 16] la figure 6 est une vue en perspective d'un dispositif de connexion selon un second mode de réalisation de l'invention, la dent et la poignée du dispositif de connexion n'étant pas emboitées;
[Fig. 17] la figure 17 est une vue similaire à celle de la figure 16 montrant la dent et la poignée emboitées ;
[Fig. 18] la figure 18 est une vue en perspective du clip du dispositif de la figure 16;
[Fig. 19] la figure 19 est une autre vue en perspective du clip du dispositif de la figure 16 ;
[Fig. 20] la figure 20 est une vue de derrière du dispositif de fixation dans la configuration de la figure 16 ;
[Fig. 21] la figure 21 est une vue de derrière du dispositif de fixation dans la configuration de la figure 17 ;
[Fig. 22] la figure 22 est une vue en coupe du dispositif de fixation dans la configuration de la figure 16 ;
[Fig. 23] la figure 23 est une vue en coupe du dispositif de fixation dans la configuration de la figure 17.

### Description détaillée de l'invention

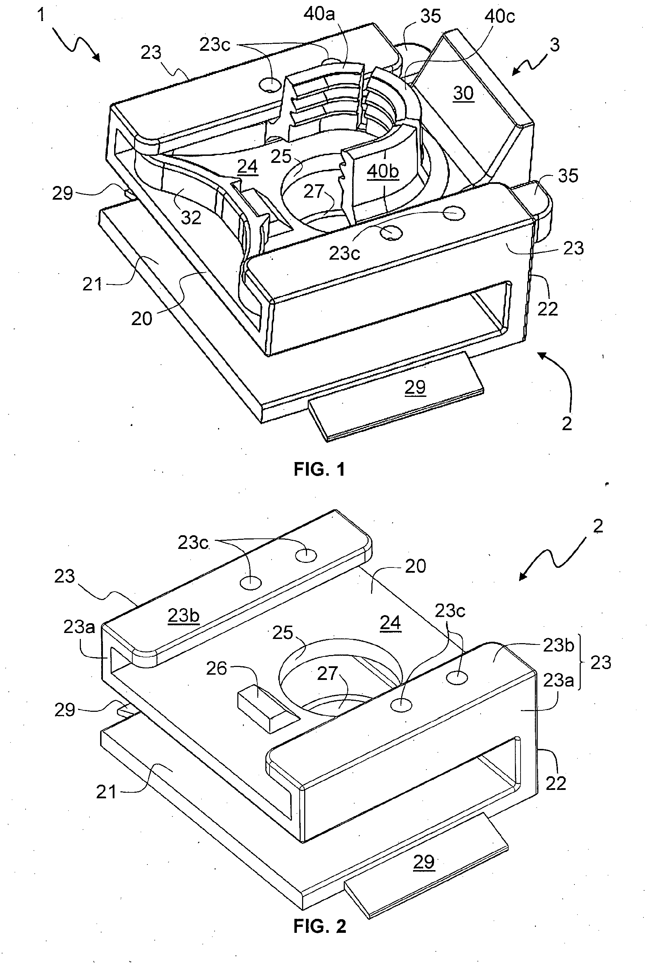

Les figures 1 à 15 illustrent un dispositif de connexion 1 pour fixer de manière amovible un composant 10 à un support 11 selon un premier mode de réalisation de l'invention.

La figure 1 illustre un dispositif de connexion 1 pour fixer de manière amovible un composant 10 à un support 11. Le dispositif de connexion 1 comprend un clip 2 et un insert 3 monté de manière mobile sur le clip 2. L'insert 3 comprend un verrou 4 pour engager de manière amovible un goujon 12 en saillie du support 11, qui est un panneau de carrosserie d'un véhicule dans cet exemple.

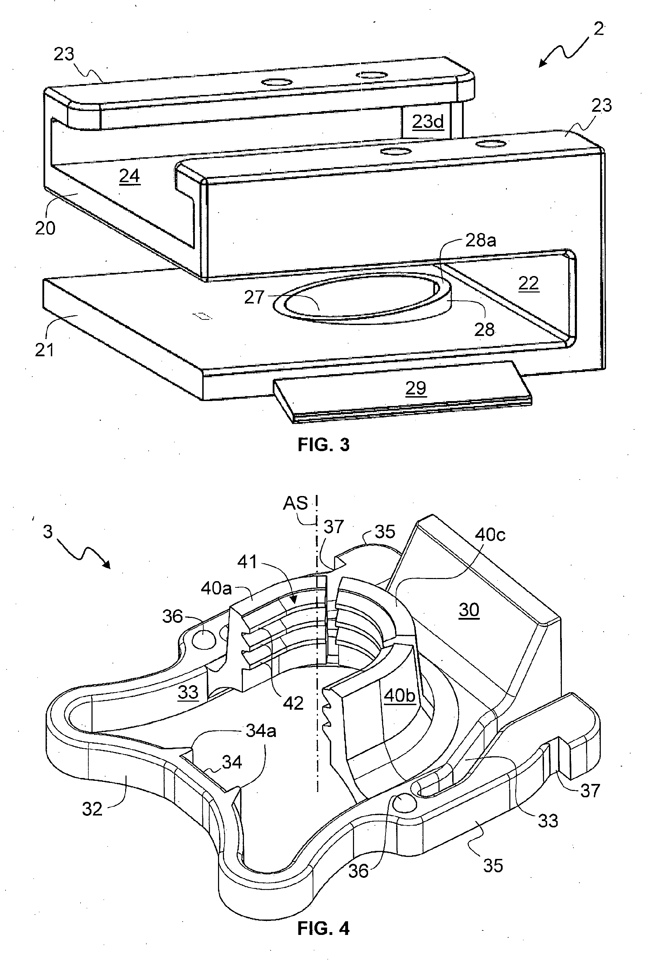

Le clip 2, illustré plus clairement sur les figures 2 et 3, comprend un bras supérieur plan 20 et un bras inférieur plan 21 reliés par une partie de connexion 22 à une première extrémité du clip 2. Le clip 2 comprend également une paire de brides opposées 23 ayant chacune une paroi latérale 23a faisant saillie du bras supérieur 20 et une lèvre 23b s'étendant vers l'intérieur depuis l'extrémité libre de la paroi latérale 23a, vers l'autre bride 23. Par exemple, chaque lèvre 23b comprend une paire de trous 23c dans son épaisseur, qui sont espacés sur leur longueur. Bien entendu, selon des variantes du présent mode de réalisation, les lèvres 23b ou au moins une des lèvres 23b peuvent (peut) ne pas comprendre les (de) trou(s) 23c. Les brides 23 décrivent ensemble un guide profilé sous la forme d'une fente clavetée 24 pour recevoir l'insert 3. Chaque paroi latérale 23a comprend une rampe 23d inclinée vers l'intérieur à la première extrémité du clip 2, qui décrivent ensemble une partie rétrécie de la fente clavetée 24.

Le bras supérieur 20 comprend un trou 25 à travers son épaisseur et une butée 26 faisant saillie dans la fente clavetée 24 à partir d'une partie centrale du bras supérieur 20, entre le trou 25 et une seconde extrémité ouverte du clip 2. Le bras inférieur comprend également un trou 27 et une paroi saillante 28 autour d'une partie de la périphérie du trou 25 adjacente à la première extrémité du clip 2. La paroi saillante 28 a la forme d'un cylindre creux tronqué circulaire droit, qui décrit une surface d'attaque conique 28a faisant face à la seconde extrémité ouverte du clip 2.

Le clip 2 comprend également une paire d'amortisseurs de vibrations 29 dépendant et faisant saillie vers l'extérieur de chaque côté du bras inférieur 21. Dans cet exemple, chaque amortisseur de vibrations 29 se présente sous la forme d'une languette plane et inclinée, mais d'autres configurations sont envisagées.

L'insert 3, qui est représenté plus clairement sur la figure 4, comprend une poignée 30 à une première extrémité, une partie ressort incurvée 32 à une seconde extrémité et une paire de rails latéraux 33 reliant la poignée 30 à la partie ressort 32. Dans cet exemple, la poignée 30 est un élément de préhension en forme de coin. La partie ressort 32 se courbe vers l'intérieur à partir de la seconde extrémité de l'insert 3 et comprend une encoche 34 dans une région centrale, sur un côté intérieur de celle-ci. L'encoche 34 est décrite entre une paire de saillies 34a. Ainsi, l'insert 3 comprend la poignée 30 pour le déplacer entre les positions déployée et rétractée.

L'insert 3 comprend également une paire de bras élastiques 35 s'étendant depuis une région centrale des rails latéraux 33 jusqu'à la première extrémité. L'insert 3 peut également comprendre une paire de saillies de retenue hémisphériques 36 à l'intersection entre les rails latéraux 33 et les bras élastiques 35, pour coopérer avec les trous 23c dans les lèvres 23b du clip 2. Bien entendu, selon des variantes du présent mode de réalisation de l'invention, l'insert 3 peut ne pas comprendre une ou des telle(s) paire de saillies de retenue hémisphériques 36 et notamment dans au moins une variante selon laquelle aucun trou 23c n'est prévu dans les lèvres du clip 2..

Ainsi selon une variante non illustrée du présente mode de réalisation, aucun trou 23c n'est prévu dans les lèvres du clip 2 et aucune saillie de retenue hémisphérique 36 n'est prévue dans l'insert 3.

Chaque bras élastique 35 s'étend le long d'un côté extérieur de l'un des rails latéraux 33, mais à distance de celui-ci. Chaque bras élastique 35 comprend un évidement 37 sur son côté extérieur adjacent à son extrémité libre, pour coopérer avec les rampes 23d des parois latérales 23a des brides 23 pour résister au mouvement de l'insert 3 depuis la position déployée vers la position rétractée.

Le verrou 4 comprend trois bras de verrouillage 40a, 40b, 40c, chacun faisant saillie vers l'intérieur et vers le haut à partir de l'insert 3 pour décrire un réceptacle de goujon 41. Chaque bras de verrouillage 40a, 40b, 40c comprend une série de dents 42 espacées le long de l'axe AS du réceptacle de goujon 41. Les bras de verrouillage 40a, 40b, 40c comprennent des premier et deuxième bras de verrouillage opposés 40a, 40b faisant saillie des rails latéraux respectifs 33, et un troisième bras de verrouillage 40c faisant saillie de la poignée 30.

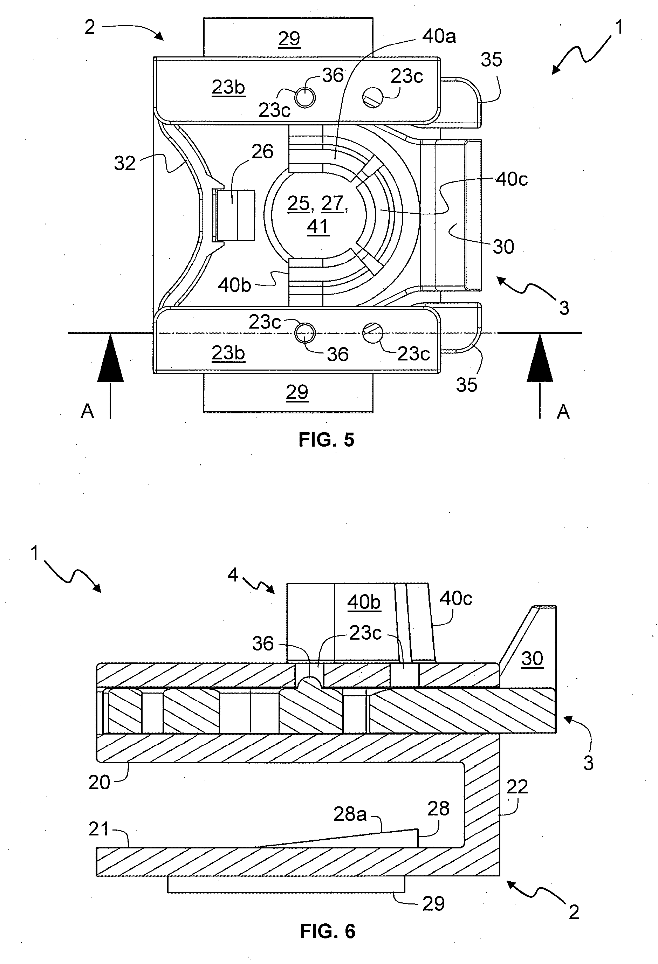

En se référant maintenant aux figures 5 et 6, l'insert 3 est inséré dans la fente clavetée 24 à partir de la deuxième extrémité, de telle sorte que les rails latéraux 33 et les bras à ressort 35 soient recouverts par les lèvres 23b des brides 23. Ce faisant, les saillies de retenue hémisphériques 36 poussent légèrement les lèvres 23b vers le haut , en les éloignant du bras supérieur 20, jusqu'à ce qu'elles s'enclenchent dans les trous 23c correspondant à la position déployée de l'insert 3, et que les évidements 37 des bras élastiques 35 s'enclenchent dans les rampes 23d des parois latérales 23a des brides 23. Dans cette position déployée, l'encoche 34 de la partie ressort 32 s'engage avec la butée 26 du bras supérieur 20 du clip 2.

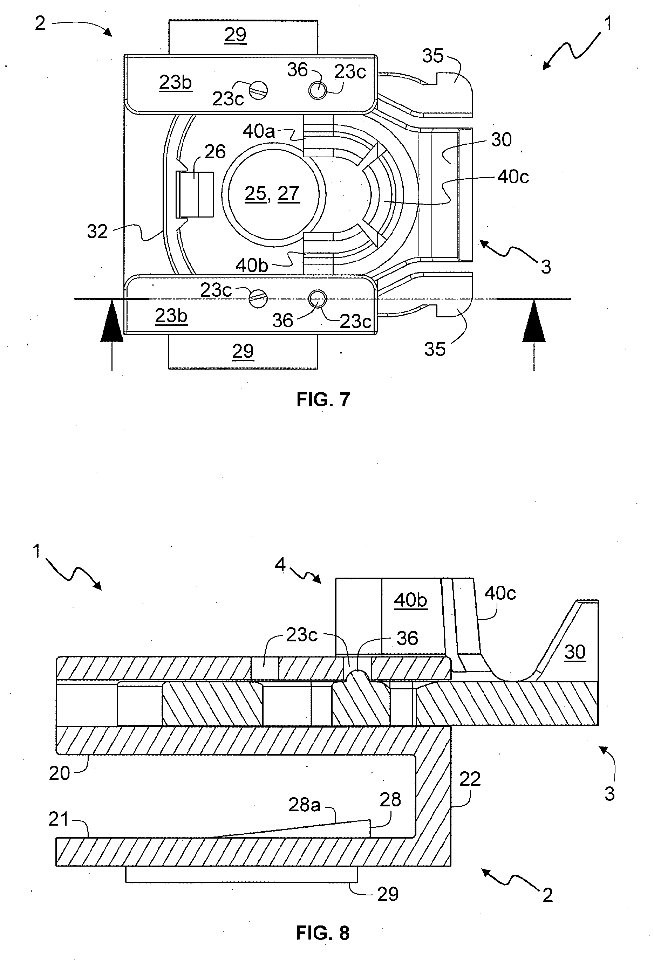

Afin de déplacer l'insert 3 de la position déployée à la position rétractée, illustrée sur les figures 7 et 8, la poignée 30 est tirée à l'écart du clip 2 pour déloger les saillies de retenue hémisphériques 36 des trous 23c. Ce mouvement force également les bras à ressort 35 à monter sur les rampes 23d, les poussant l'un vers l'autre jusqu'à ce que les rampes 23d engagent les côtés extérieurs intermédiaires des bras à ressort 35. Ainsi, les saillies de retenue hémisphériques 36 et les bras élastiques 35 résistent tous deux au mouvement de l'insert 3 de la position déployée vers la position rétractée.

La poursuite du mouvement de l'insert 3 dans cette direction amène les saillies de retenue hémisphériques 36 à s'aligner avec les trous 23c des lèvres 23b correspondant à la position rétractée, et à s'enclencher avec eux. Ce mouvement provoque la déformation de la partie ressort 32 autour de la butée 26, créant une force de rappel poussant l'insert 3 vers la position déployée. Pour ramener l'insert 3 en position déployée, il suffit de pousser la poignée 30 dans la direction opposée. L'homme du métier comprendra que la force requise pour ce faire sera bien moindre, en raison de la force de rappel de la partie ressort 32.

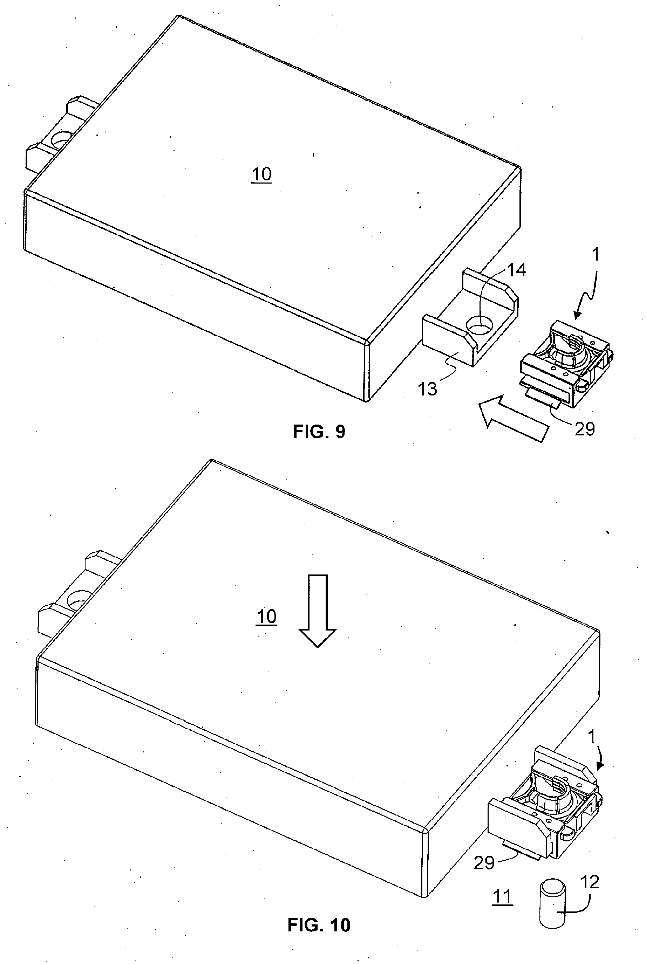

En se référant maintenant à la figure 9, afin de fixer le composant 10 au support 11, qui est un panneau de carrosserie de véhicule dans cet exemple, le dispositif de connexion 1 est fixé à une bride 13 du composant 10 qui comprend un trou de montage 14. Pour ce faire, la bride 13 est insérée dans la deuxième extrémité ouverte du clip 2 jusqu'à ce que la surface d'attaque conique 28a de la paroi saillante 28 vienne en contact avec l'extrémité de la bride 13, un effort de poussée devant alors être appliqué comme indiqué par la flèche sur la figure 9. Les bras supérieur et inférieur 20, 21 sont alors écartés l'un de l'autre jusqu'à ce que la paroi saillante 28 s'aligne avec le trou 14 de la bride, où elle s'enclenche.

Le composant 10 est ensuite fixé au support 11 en alignant le goujon 12 du support 11 avec le trou 14 de la bride 13, les trous 25, 27 des bras 20, 21 du clip 2 et le réceptacle de goujon 41 de l'insert 3, et en le poussant vers le bas, comme indiqué par la flèche de la figure 10. Ceci force le goujon 12 dans le réceptacle de goujon 41 et en engagement avec les dents 42, en écartant les bras de verrouillage 40a, 40b, 40c, de manière à précontraindre la connexion entre les dents 42 et le goujon 12. Ceci force également les amortisseurs de vibrations 29 du clip 2 contre le support 11, les déformant légèrement de sorte qu'ils s'engagent élastiquement dans le support 11 pour inhiber les vibrations dans le composant 10. L'insert 3 peut être formé d'une matière plastique et le goujon 12 peut avoir des crêtes ou des filets avec lesquels les dents 42 s'engagent. Dans certains exemples, cependant, au moins les dents 42 peuvent être formées d'un matériau métallique de manière à s'engager dans un goujon 12 lisse.

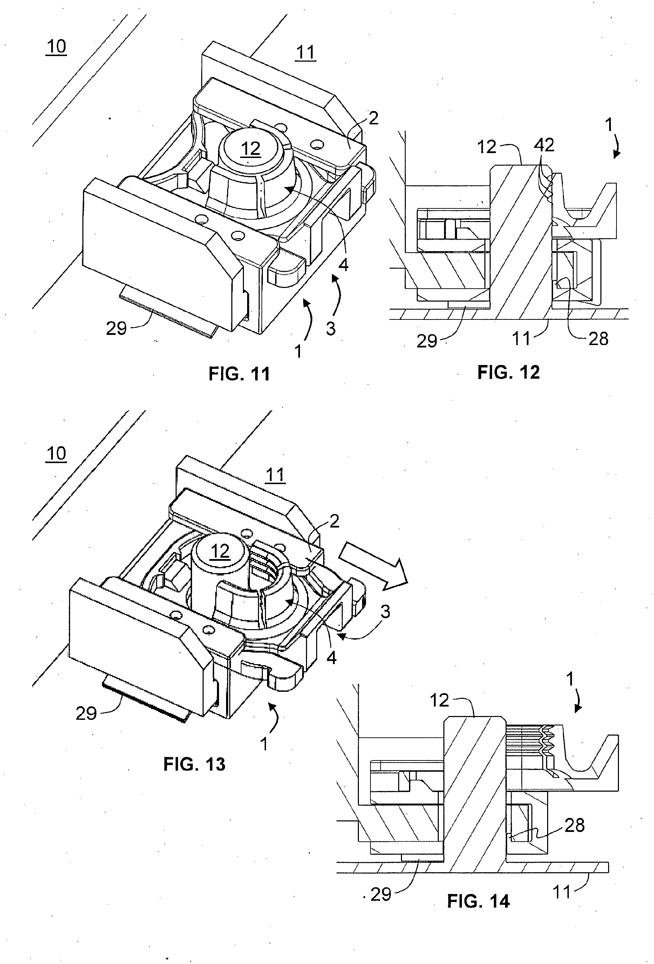

Les figures 11 et 12 montrent l'engagement entre le dispositif de connexion 1 et le goujon 12. La figure 12 montre également l'engagement entre la paroi saillante 28 et le trou 14 dans la bride 13.

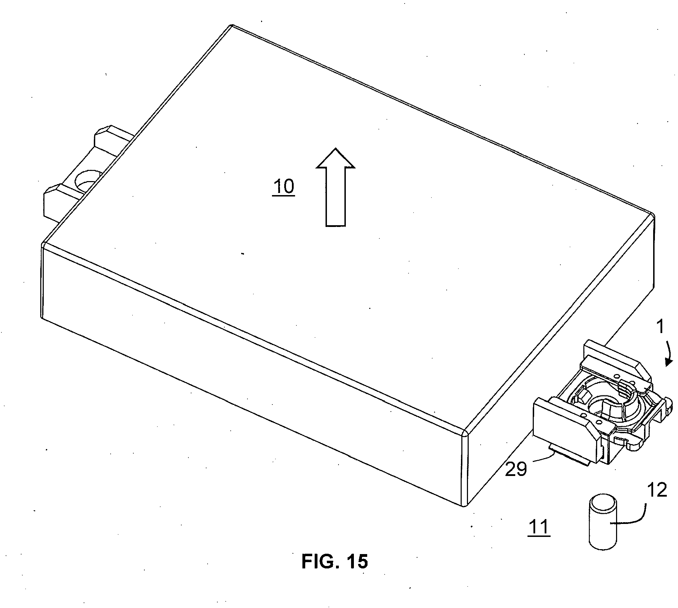

En se référant maintenant aux figures 13 et 14, le composant 10 est retiré du support 11 en déplaçant l'insert 3 de la position déployée à la position rétractée, ce qui désengagé les dents 42 du goujon 12. Le composant 10 peut alors être soulevé du support 11, comme illustré par la flèche de la figure 15.

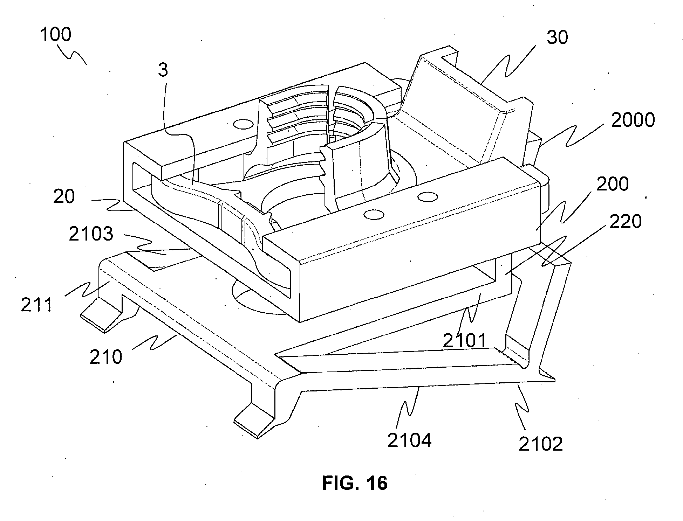

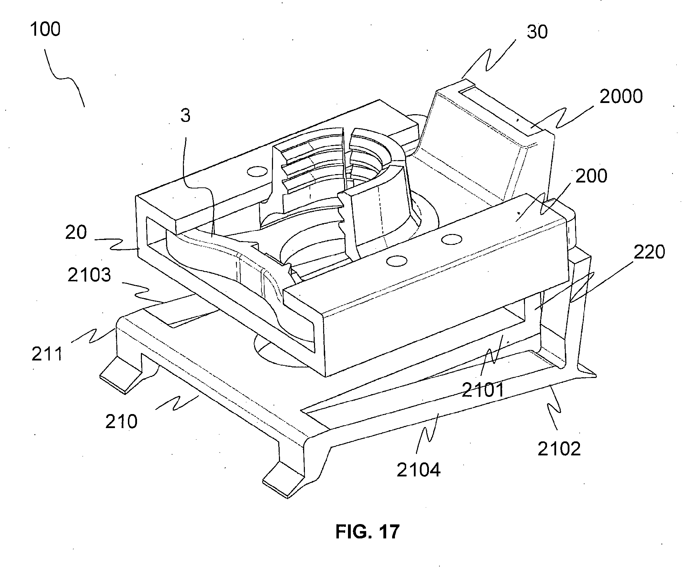

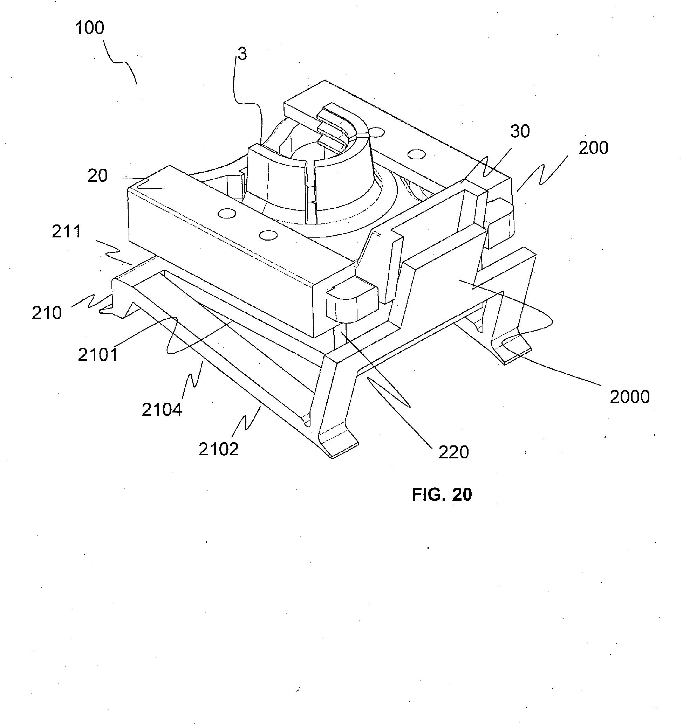

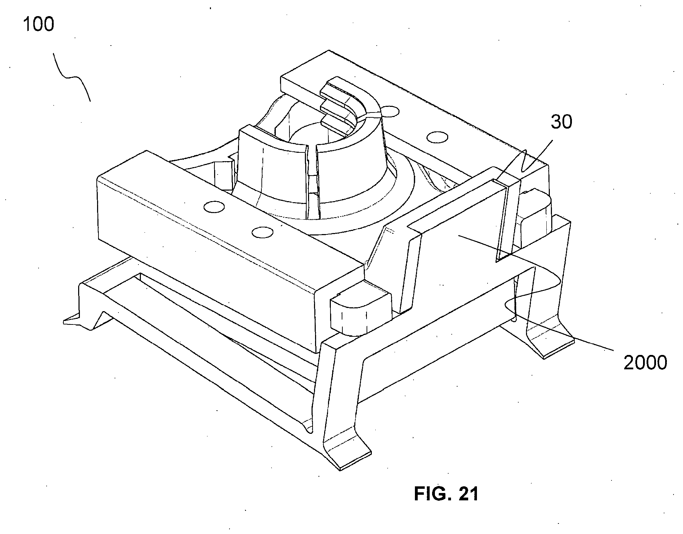

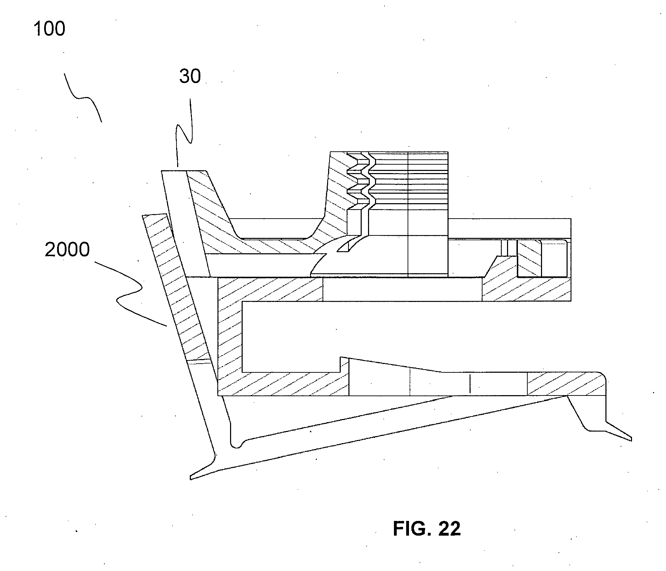

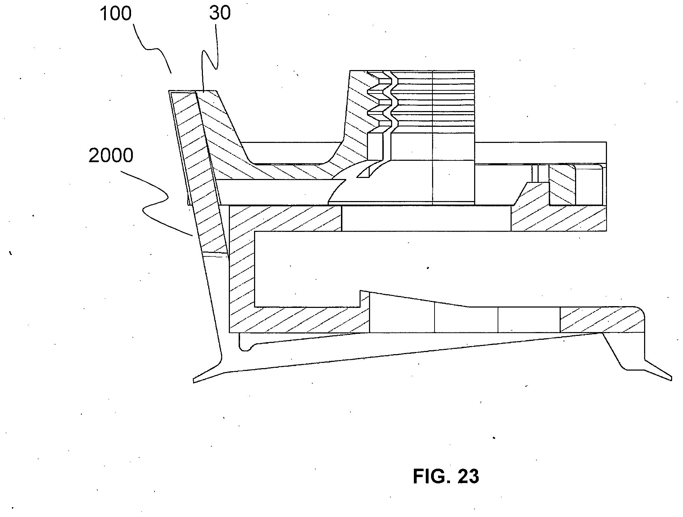

Les figures 16 à 23 illustrent un dispositif de fixation 100 pour fixer de manière amovible un composant 10 à un support 11 selon un second mode de réalisation de l'invention.

Le dispositif de fixation 100 est identique au dispositif de fixation 1 décrit précédemment (et les références numériques sont conservées pour les éléments en commun) si ce n'est les différences décrites ci-après.

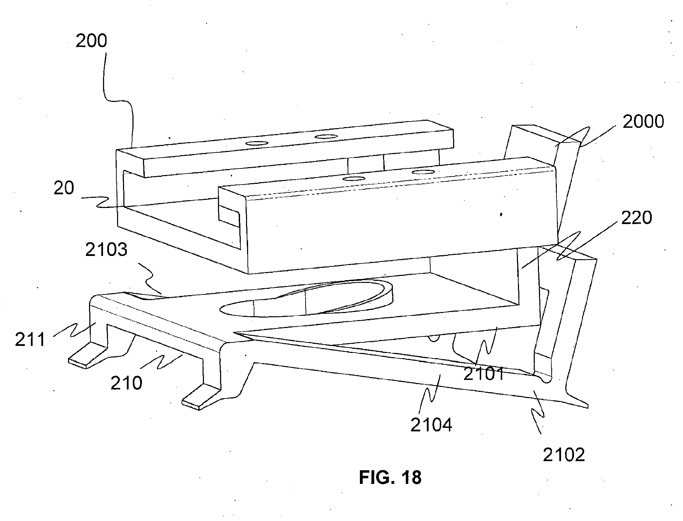

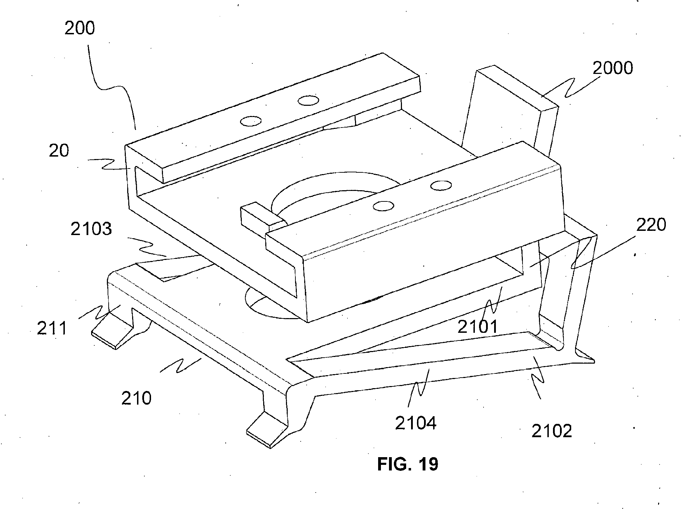

Le clip 200 illustré plus précisément par les figures 18 et 19 comprend un bras supérieur plan 20 et un bras inférieur 210, les bras étant reliés par une partie de connexion 220 à une première extrémité du clip 200.

Le bras inférieur 210 comprend un première portion 2101 qui est sensiblement plate et qui est connectée au bras supérieur 20 par la partie de connexion 220. Le bras inférieur comprend également une seconde portion 2102 connectée à la première portion 2101 en une seconde extrémité 211 du clip. La seconde portion comprend une première jambe 2103 et une seconde jambe 2104, les première et seconde jambes étant sensiblement parallèles. Les deux jambes 2103 et 2104 sont prolongées au niveau de la première extrémité du clip par une dent 2000 sensiblement perpendiculaire aux jambes 2103, 2104 . Ainsi, les deux jambes 2103 et 2104 sont connectée à la première portion 2101 au niveau de la première extrémité du clip 200. Ainsi, la seconde portion 2102 prolongée par la dent 2000 présente une certaine élasticité par rapport à la première portion du fait de ses jambes connectées en leur extrémités à la première portion 2101.

Ainsi, le clip 200 comprend une dent 2000 disposée en la première extrémité du clip 200. Bien entendu, selon différent modes de réalisation de la présente invention, la dent peut prendre différentes formes et dimensions. Par exemple, la dent peut être un parallélépipède rectangle.

Selon un mode de réalisation de l'invention, la poignée 30 de l'insert 3 et la dent 2000 du clip 200 sont prévus pour coopérer de manière à indiquer que le dispositif de fixation est correctement monté sur le composant 10.

Selon un mode de réalisation de l'invention, la poignée 30 de l'insert et la dent 2000 du clip 200 sont prévus pour s'emboiter au moins partiellement lorsque le dispositif de fixation est correctement monté sur le composant 10. Ainsi, la poignée 30 présente un évidement en sa face externe prévu pour accueillir la dent 2000.

Par exemple, si les clip 200 et insert 3 du dispositif de fixation 1 n'ont pas été correctement assemblés ou montés sur le composant 10, alors, la dent 2000 et la poignée 30 ne vont pas s'emboiter suffisamment. Par exemple, lorsque le dispositif de fixation est correctement assemblé ou monté sur le composant, l'évidement dans la poignée 30 est prévu pour épouser la forme de la dent 2000 sur trois de ses faces et pour faire en sorte que la quatrième face de la dent soit affleurante au niveau de la face externe de la poignée 30.

Ainsi, lors de l'assemblage du dispositif de fixation 100 sur le composant 10, les première et seconde jambes 2103, 2104 de la seconde portion 2102 se déplacent élastiquement vers le haut et poussent la dent 2000 vers la poignée 30 jusqu'à ce que la dent épouse l'évidement de la poignée 30 de sorte que la poignée 30 et la dent 2000 présentent sur un côté extérieur du clip une surface affleurante ou flush.

Ainsi, l'invention fournit un dispositif de connexion 1 pour monter le composant 10 à un panneau de carrosserie de véhicule 11, qui peut être pré-assemblé avec le composant 10 pour permettre une connexion et une déconnexion simples avec le goujon 12 du panneau de carrosserie de véhicule 11.

L'homme du métier appréciera que plusieurs variantes des modes de réalisation précités soient envisageables sans sortir du cadre de l'invention.

## Revendications

1. Dispositif de connexion (1) pour fixer de manière amovible un composant (10) à un support (11), **caractérisé en ce que** le dispositif de connexion comprend
un clip (2) avec un élément d'engagement pour s'engager dans un trou (14) dans un composant (10) ; et
un insert (3) monté sur le clip (2) et comportant un verrou (4),
dans lequel (3) l'insert est mobile par rapport au clip (2) entre :
une position déployée, dans laquelle le verrou est aligné, en utilisation, avec le trou du composant (10) dans lequel le clip est engagé, de sorte qu'un goujon (12) d'un support (11) peut être poussé dans le trou (14) et en engagement avec le verrou pour fixer le composant (10) au support (11) ; et
une position rétractée, dans laquelle le verrou n'est pas aligné avec le trou, de sorte que le goujon (12) peut être retiré du trou et le composant peut être retiré du support.

2. Dispositif de connexion selon la revendication 1, **caractérisé en ce que** l'élément d'engagement comprend une saillie et le clip comprend un bras supérieur et un bras inférieur entre lesquels la saillie s'étend pour permettre au clip d'être forcé, en utilisation, sur une bride de fixation (13) du composant qui comprend le trou (14) de sorte que la saillie s'enclenche en engagement avec le trou (14).

3. Dispositif de connexion selon la revendication 1 ou la revendication 2, **caractérisé en ce que** l'insert est retenu de manière amovible dans chacune des positions étendue et rétractée par des éléments de retenue coopérants de l'insert (3) et du clip (2).

4. Dispositif de connexion selon la revendication 3, **caractérisé en ce que** le clip (2) comprend un guide profilé le long duquel l'insert (3) peut coulisser de manière captive entre les positions déployée et rétractée, les éléments de retenue comprenant une saillie sur l'un de l'insert et du guide profilé qui coopère avec un évidement ou un trou dans l'autre de l'insert et du guide profilé.

5. Dispositif de connexion selon l'une des revendications précédentes, **caractérisé en ce que** l'insert est contraint de manière élastique vers la position déployée.

6. Dispositif de connexion selon la revendication 5, **caractérisé en ce que** l'insert comprend un élément de ressort qui coopère avec le clip pour résister au mouvement de l'insert de la position déployée vers la position rétractée.

7. Dispositif de connexion selon l'une des revendications précédentes, **caractérisé en ce que** l'insert (3) comprend une poignée (30) pour le déplacer entre les positions déployée et rétractée.

8. Dispositif de connexion selon les revendications 6 et 7, **caractérisé en ce que** la poignée est située sur un côté de l'insert opposé à l'élément de ressort et le verrou est situé sur le même côté de l'insert que la poignée.

9. Dispositif de connexion selon l'une des revendications précédentes, **caractérisé en ce que** le clip (2) comprend une dent (200) disposé en une extrémité du clip (2).

10. Dispositif de connexion selon les revendications 7 et 8, **caractérisé en ce que** la poignée (30) de l'insert et la dent (200) du clip (2) sont prévus pour coopérer de manière à indiquer que le dispositif de fixation est correctement monté sur le composant (10).

11. Dispositif de connexion selon les revendications 7 et 8, **caractérisé en ce que** la poignée (30) de l'insert et la dent (200) du clip (2) sont prévus pour s'emboîter au moins partiellement lorsque le dispositif de fixation est correctement monté sur le composant (10).

12. Dispositif de connexion selon l'une des revendications précédentes, **caractérisé en ce que** le clip (2) comprend une paire d'amortisseurs de vibrations dépendant de chaque côté ou de chaque extrémité de celui-ci pour s'engager sur le support.

13. Dispositif de connexion selon la revendication 11, **caractérisé en ce qu'**au moins un des amortisseurs comprend au moins une languette ou élément incliné qui fait saillie vers l'extérieur du clip.

## Patentansprüche

1. Verbindungsvorrichtung (1) zur lösbaren Befestigung eines Bauteils (10) an einem Träger (11), **dadurch gekennzeichnet, dass** die Verbindungsvorrichtung Folgendes aufweist:
eine Klammer (2) mit einem Eingriffselement zum Eingreifen in ein Loch (14) in einem Bauteil (10); und
einen Einsatz (3), der an der Klammer (2) angebracht ist und
eine Rastklinke (4) aufweist, wobei (3) der Einsatz in Bezug auf die Klammer (2) bewegbar ist zwischen:
einer ausgefahrenen Position, in der die Rastklinke, im Gebrauch, mit dem Loch in dem Bauteil (10), mit dem die Rastklinke in Eingriff ist, ausgerichtet ist, sodass ein Bolzen (12) an einem Träger (11) in das Loch (14) hinein und in Eingriff mit der Rastklinke geschoben werden kann, um das Bauteil (10) an dem Träger (11) zu befestigen; und
einer eingefahrenen Position, in der die Rastklinke nicht mit dem Loch ausgerichtet ist, sodass der Bolzen (12) aus dem Loch entfernt werden kann und das Bauteil von dem Träger entfernt werden kann.

2. Verbindungsvorrichtung nach Anspruch 1, **dadurch gekennzeichnet, dass** das Eingriffselement einen Vorsprung aufweist und die Klammer einen oberen Arm und einen unteren Arm aufweist, zwischen denen sich der Vorsprung erstreckt, um zu ermöglichen, dass die Klammer, im Gebrauch, auf einen Montageflansch (13) auf dem Bauteil, das das Loch (14) aufweist, gedrückt werden kann, sodass der Vorsprung in einen Rasteingriff mit dem Loch (14) kommt.

3. Verbindungsvorrichtung nach Anspruch 1 oder 2, **dadurch gekennzeichnet, dass** der Einsatz durch zusammenwirkende Halteelemente an dem Einsatz (3) und an der Klammer (2) lösbar in sowohl der ausgefahrenen als auch der eingefahrenen Position gehalten wird.

4. Verbindungsvorrichtung nach Anspruch 3, **dadurch gekennzeichnet, dass** die Klammer (2) eine Profilführung aufweist, entlang der der Einsatz (3) unverlierbar zwischen der ausgefahrenen und der eingefahrenen Position gleiten kann, wobei die Halteelemente einen Vorsprung an einem von dem Einsatz oder der Profilführung aufweisen, der mit einer Aussparung oder einem Loch in dem anderen von dem Einsatz und der Profilführung zusammenwirkt.

5. Verbindungsvorrichtung nach einem der vorhergehenden Ansprüche, **dadurch gekennzeichnet, dass** der Einsatz elastisch in die ausgefahrene Position gedrückt wird.

6. Verbindungsvorrichtung nach Anspruch 5, **dadurch gekennzeichnet, dass** der Einsatz ein Federelement aufweist, das mit der Klammer zusammenwirkt, um der Bewegung des Einsatzes aus der eingefahrenen Position in die ausgefahrene Position entgegenzuwirken.

7. Verbindungsvorrichtung nach einem der vorhergehenden Ansprüche, **dadurch gekennzeichnet, dass** der Einsatz (3) einen Griff (30) aufweist, um ihn zwischen der ausgefahrenen und der eingefahrenen Position zu bewegen.

8. Verbindungsvorrichtung nach Anspruch 6 und 7, **dadurch gekennzeichnet, dass** der Griff auf einer dem Federelement gegenüberliegenden Seite des Einsatzes angeordnet ist und die Rastklinke auf der gleichen Seite des Einsatzes wie der Griff angeordnet ist.

9. Verbindungsvorrichtung nach einem der vorhergehenden Ansprüche, **dadurch gekennzeichnet, dass** die Klammer (2) einen Zahn (200) aufweist, der an einem Ende der Klammer (2) angeordnet ist.

10. Verbindungsvorrichtung nach Anspruch 7 und 8, **dadurch gekennzeichnet, dass** der Griff (30) an dem Einsatz und der Zahn (200) an der Klammer (2) so ausgebildet sind, dass sie derart zusammenwirken, dass sie anzeigen, dass die Befestigungsvorrichtung korrekt an dem Bauteil (10) angebracht ist.

11. Verbindungsvorrichtung nach Anspruch 7 und 8, **dadurch gekennzeichnet, dass** der Griff (30) an dem Einsatz und der Zahn (200) an der Klammer (2) so ausgebildet sind, dass sie zumindest teilweise in Eingriff sind, wenn die Verbindungsvorrichtung korrekt an dem Bauteil (10) angebracht ist.

12. Verbindungsvorrichtung nach einem der vorhergehenden Ansprüche, **dadurch gekennzeichnet, dass** die Klammer (2) ein Paar von Schwingungsdämpfern aufweist, die sich von jeder Seite oder von jedem Ende davon nach unten erstrecken, um mit dem Träger in Eingriff zu kommen.

13. Verbindungsvorrichtung nach Anspruch 11, **dadurch gekennzeichnet, dass** zumindest einer der Dämpfer mindestens eine Lasche oder ein schräges Element aufweist, die bzw. das von der Klammer nach außen vorsteht.

## Claims

1. A connecting device (1) for releasably fastening a component (10) to a support (11), **characterized in that** the connecting device comprises
a clip (2) with an engagement element for engaging in a hole (14) in a component (10); and
an insert (3) mounted on the clip (2) and comprising a latch (4), in which (3) the insert is movable relative to the clip (2) between:
a deployed position, in which the latch is aligned, when in use, with the hole in the component (10) in which the clip is engaged, so that a stud (12) on a support (11) can be pushed into the hole (14) and into engagement with the latch to fasten the component (10) to the support (11); and
a retracted position, in which the latch is not aligned with the hole, so that the stud (12) can be removed from the hole and the component can be removed from the support.

2. The connecting device according to claim 1, **characterized in that** the engagement element comprises a protrusion and the clip comprises an upper arm and a lower arm between which the protrusion extends to enable the clip to be forced, when in use, onto a mounting flange (13) on the component that comprises the hole (14) so that the protrusion snaps into engagement with the hole (14).

3. The connecting device according to claim 1 or claim 2, **characterized in that** the insert is releasably retained in each of the extended and retracted positions by cooperating retaining elements on the insert (3) and on the clip (2).

4. The connecting device according to claim 3, **characterized in that** the clip (2) comprises a profiled guide along which the insert (3) can slide captively between the deployed and retracted positions, the retaining elements comprising a protrusion on one of the insert and the profiled guide that cooperates with a recess or a hole in the other of the insert and the profiled guide.

5. The connecting device according to any of the preceding claims, **characterized in that** the insert is elastically forced towards the deployed position.

6. The connecting device according to claim 5, **characterized in that** the insert comprises a spring element that cooperates with the clip to oppose the movement of the insert from the deployed position to the retracted position.

7. The connecting device according to any of the preceding claims, **characterized in that** the insert (3) comprises a handle (30) for moving it between the deployed and retracted positions.

8. The connecting device according to claims 6 and 7, **characterized in that** the handle is located on a side of the insert opposite the spring element and the latch is located on the same side of the insert as the handle.

9. The connecting device according to any of the preceding claims, **characterized in that** the clip (2) comprises a tooth (200) arranged at one end of the clip (2).

10. The connecting device according to claims 7 and 8, **characterized in that** the handle (30) on the insert and the tooth (200) on the clip (2) are designed to cooperate in such a way as to indicate that the fastening device is correctly mounted on the component (10).

11. The connecting device according to claims 7 and 8, **characterized in that** the handle (30) on the insert and the tooth (200) on the clip (2) are designed to engage at least partially when the connecting device is correctly mounted on the component (10).

12. The connecting device according to any of the preceding claims, **characterized in that** the clip (2) comprises a pair of vibration dampers extending downwards from each side or from each end thereof to engage the support.

13. The connecting device according to claim 11, **characterized in that** at least one of the dampers comprises at least one tab or sloping element that protrudes outwards from the clip.
